# EUROPEAN PATENT SPECIFICATION

(11) **EP 1 761 001 B1**
(45) Date of publication and mention of the grant of the patent: **28.07.2010**
(21) Application number: 06018656.6
(22) Date of filing: 06.09.2006
(51) Int. Cl.: H04M 1/05, H04M 1/60

(54) **Bluetooth wireless headset having earphone**
Drahtloser Bluetooth-Kopfhörer mit Kopfhörer
Casque sans fil bluetooth comportant un écouter

(30) Priority: 06.09.2005 KR 20050082933; 19.10.2005 KR 20050029929; 21.07.2006 KR 20060068640; 25.05.2006 KR 20060046922
(43) Date of publication of application: 07.03.2007
(73) Proprietor: Wise&Blue Co., Ltd., 345-30 Gasan-dong, Geumcheon-gu Seoul 153-802 (KR)
(72) Inventor: Lee, Young-Soon, Saha-gu, Busan (KR)
(74) Representative: Wiebusch, Manfred

(56) References cited:
- EP-A- 1 075 128
- EP-A- 1 538 815
- WO-A-99/56448
- WO-A-2006/072968
- WO-A1-00/21264
- WO-A2-02/11492
- DE-U1-202004 005 524
- US-A- 4 917 504
- US-A1- 2005 070 345

## Description

### BACKGROUND OF THE INVENTION

### Field of the Invention

The present invention relates to a Bluetooth wireless headset having an earphone, in particular, in which a push button module is adopted so that the earphone moves inward in response to a single push and moves outward in response to a second push.

### Description of the Prior Art

Recently, separate wireless headsets have been used as accessories for electronic devices functioning as main bodies such as a mobile phone and an MP3 player. By using such a wireless headset, a user can use an electronic device such as a mobile phone and an MP3 player without having to hold it in his/her hand. The usage of such a wireless headset has been enabled by the development of local wireless communication technologies such as Bluetooth.

The wireless headset is typically provided with a frame, which is shaped in a similar manner to the earflap, and made integrally to or separately from the wireless headset. The frame of the wireless headset is hung on the earflap so that the wireless headset can remain stationary at a mounting position. However, this frame is inconvenient to use since a user can attach the headset on him/her through a complicated operation. For example, the user should hook the frame around his/her ear or deform the frame, and it is not easy at all to attach the wireless headset to a correct position.

Furthermore, the frame increases the overall size of the wireless headset, and due to its hook-like configuration, is frequently caught by other objects, such as a pocket flap.

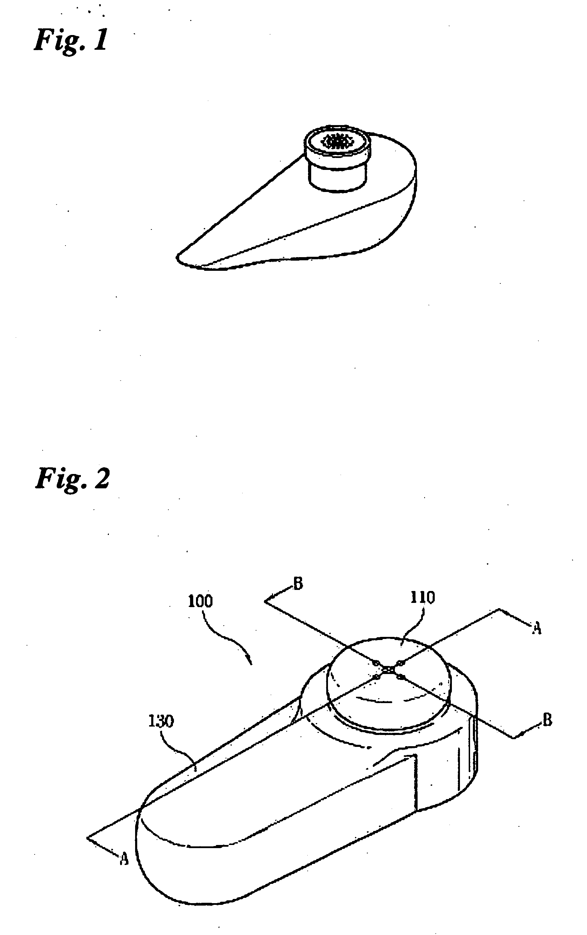

To overcome such problems, a headset as shown in FIG. 1 was developed.

Referring to FIG. 1, the exterior of the headset is composed of an earphone for outputting audio signals and a body to which the earphone is attached. Although not shown in the drawing, the body is basically mounted with a receiver for receiving radio signals and a circuit (Bluetooth chip) for amplifying and modulating the radio signals to send audio signals to the earphone where a speaker is mounted.

As seen in FIG. 1, in this headset, the earphone is fixedly projected from the body so that the earphone can be easily inserted into an ear hole and the headset can be easily attached to the ear. Then, the earphone is smoothly seated into the ear hole.

However, when the headset is not used, the user carries the headset typically in his/her bag or pocket (e.g., of a shirt or trousers). Where the headset is kept in the pocket, the projected earphone or an ear hook presses a body part (e.g., chest and thigh), which is unpleasant to the user. Where the headset is kept in the bag, the projected earphone or the ear hook may collide into other articles and thus be damaged.

WO 2006/072968 A discloses a headset according to the preamble of claim 1 which has also the function of a wristwatch and is adapted to be fitted and locked in a seat of a strap which the user wears around his wrist.

### SUMMARY OF THE INVENTION

The present invention has been made to solve the above-mentioned problems occurring in the prior art, and an object of the present invention is to provide a Bluetooth wireless headset having an earphone, in which the earphone is retracted into a body when the headset is not used, but extracted from the body when the headset is used so that the headset can be attached to an ear, by which a user can use the headset conveniently.

According to an aspect of the invention for realizing any of the above objects, there is provided a Bluetooth wireless headset as defined in claim 1.

More specific optional features of the invention are indicated in the dependent claims.

### BRIEF DESCRIPTION OF THE DRAWINGS

The above and other objects, features and advantages of the present invention will be more apparent from the following detailed description taken in conjunction with the accompanying drawings, in which:
- FIG. 1: is a perspective view illustrating a conventional wire- less headset;
- FIG. 2: is a perspective view illustrating a Bluetooth headset having an earphone of the invention;
- FIG. 3: is a perspective view illustrating a telescopic part of the Bluetooth headset having an earphone according to a first embodiment of the invention;
- FIG. 4: is a cross-sectional view taken along the line A-A of FIG. 2;
- FIG. 5: is a cross-sectional view taken along the line B-B of FIG. 2;
- FIG. 6: is a cross-sectional view illustrating the operation of the Bluetooth headset having an earphone according to the first embodiment of the invention;
- FIG. 7: is a perspective view illustrating a telescopic part of the Bluetooth headset having an earphone according to a second embodiment of the invention;
- FIG. 8: is a front cross-sectional view illustrating the Blue- tooth headset having an earphone according to the se- cond embodiment of the invention;
- FIG. 9: is a side cross-sectional view illustrating the Blue- tooth headset having an earphone according to the se- cond embodiment of the invention;
- FIGS. 10a to 10c: are cross-sectional views illustrating the operation of the Bluetooth headset having an earphone according to the second embodiment of the invention.

### DETAILED DESCRIPTION OF THE PREFERRED EMBODIMENTS

The following detailed description will present preferred embodiments of a Bluetooth wireless headset having an earphone according to the invention with reference to the accompanying drawings, in which well-known functions or constructions will not be described in detail since they would unnecessarily obscure the intent of the invention. The following terminologies are used based on their functions in the present invention but may be construed different according to the intention or practices of users and operators. Accordingly, the terminologies shall be defined based on the general context of the specification.

### Embodiment 1

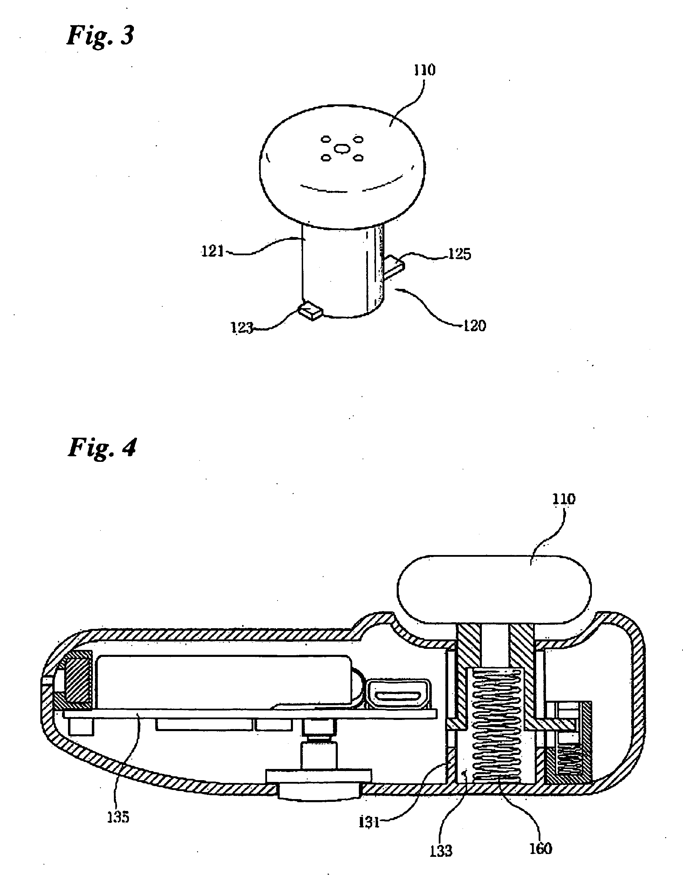

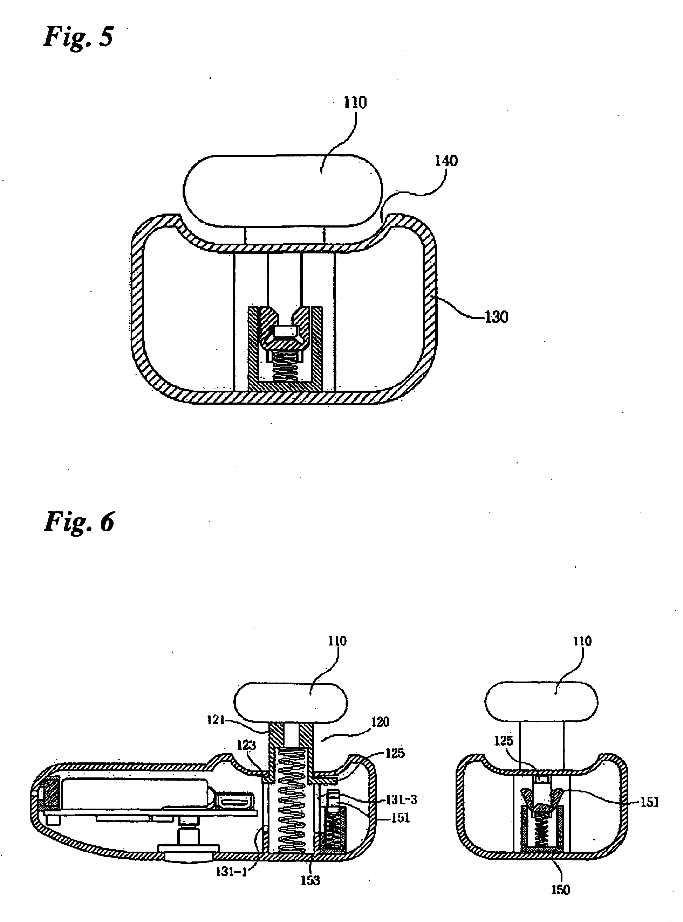

FIG. 2 is a perspective view illustrating a Bluetooth headset 100 of the invention, FIG. 3 is a perspective view illustrating a telescopic part 120 of the Bluetooth headset 100 according to a first embodiment of the invention, FIG. 4 is a cross-sectional view taken along the line A-A of FIG. 2, and FIG. 5 is a cross-sectional view taken along the line B-B of FIG. 2.

Referring to FIGS. 2 to 5, the Bluetooth headset 100 of the invention includes an earphone 110, the telescopic part 120, a body 130, an earphone recess 140, a push switch module 150 and a coil spring 160.

First, the earphone 110 has a speaker unit mounted therein, which reproduces an electric signal into an audio signal by vibrating the air. An insert member made of a soft material is provided at one end of the earphone 110 to be softly deformed when inserted into an ear of a user. Once the insert member is inserted into the ear, the inserted position can be maintained stably. Accordingly, the Bluetooth headset 100 with the earphone 110 does not need any frame or part for hanging the headset 100 on the ear, which is shaped similar to an earflap.

The telescopic part 120 includes a cylinder 121 of a hollow body, a guide protrusion 123 and a coupling protrusion 125. The guide protrusion 123 is projected horizontally from the bottom end of the cylinder 121, and serves to guide protrusion/retraction while preventing separation of the telescopic part 120. The coupling protrusion 125 is projected horizontally at a position opposed to the guide protrusion 123. The coupling protrusion 125, in case of retraction, is coupled with a locking member 151 of the push switch module 150 to be explained hereunder and fixed with the push switch module 150. In case of extraction, the coupling protrusion 12 is decoupled from the lokking member 151 of the push switch module 150. Here, the height or length of the telescopic part 120 is preferably set to such an extent that the coupling protrusion 125 can be locked into and unlocked from the locking member 151.

The body 130 is bar shaped, and has a circular partition 131 defining a space 133 where the telescopic part 120 can perform reciprocal movement (i.e., upward/downward movement in the drawings).

Here, the partition 131 has a first guide slit 131-1 and a second guide slit 131-3. The first guide slit 131-1 is arranged in a corresponding position to guide the reciprocal movement of the guide protrusion 123 of the telescopic part 120. The second guide slit 131-3 is arranged in a corresponding position to guide the reciprocal movement of the coupling protrusion 125 of the telescopic part 120 so that the coupling protrusion 125 is projected out through the partition 131.

On the exterior of the body 130, some components are provided, which include a volume controller by which a user can control the volume, a microphone for receiving voices of the user, an on/off button for turning on/off the power of the wireless headset 100 and a charge terminal for charging the battery.

In the interior of the body 130, other components are provided further, which include a Bluetooth module for performing wireless communication with a main body such as an MP3 player and a mobile phone, an amplifier circuit for amplifying signals transmitted/received by the Bluetooth module and a circuit for reproducing amplified sound waves into certain electric signals. These components of course cooperate to operate the wireless headset, and are preferably mounted on a board 135 arranged inside the body 130.

The earphone recess 140 is depressed into the body 130 from the top surface thereof, in the form of a hemisphere, so that the earphone 110 does not project out of the body 130 when retracted to the body 130.

The push switch module 150 is a locking type module, in which the locking member 151 is V-shaped to spread out during the reciprocal movement through the inside of the body 130. (Here, the locking member 151 is locked in response to first retraction, but unlocked in response to second retraction.) The push switch module 150 is arranged at a side of the space 133 of the body 130. Here, the push switch module 150 also includes a third guide slit 153 in a side of the push switch module 150. Through the third guide slit 153, the coupling protrusion 125 can move reciprocally. Here, the push switch module 150 has a known structure which remains in a pressed position when pushed down once but protrudes when pushed down again. Since this structure is well-known in the art, detailed description thereof will be omitted.

The coil spring 160 is fixed to the inside of the telescopic part 120 and to the bottom of the space 133, and serves to extract or ascend the telescopic part 120 when the coupling protrusion 125 of the telescopic part 120 is decoupled from the locking member 151 of the push switch module 150.

With reference to FIG. 6, the operation of the Bluetooth wireless headset according to the invention will be described in detail as follows.

FIG. 6 is a cross-sectional view illustrating the operation of the Bluetooth headset according to the first embodiment of the invention.

When a user presses down (or inward) the earphone 110 in a position where the telescopic part 120 is projected from the earphone recess 140, the telescopic part 120 moves downward against the repulsive force of the coil spring 160.

The telescopic part 120 moves down vertically since it is received in the space 133 by the partition 131.

In response to the downward (or inward) movement of the telescopic part 120, the guide protrusion 123 of the telescopic part 120 moves down or descends along the first guide slit 131-1, and at the same time, the coupling protrusion 125 of the telescopic part 120 opposite to the guide protrusion 123 descends along the second guide slit 131-3 of the partition 131.

While descending along the second guide slit 131-3, the coupling protrusion 125 of the telescopic part 120 is inserted into the locking member 151 of the push switch module 150.

As the coupling protrusion 125 of the telescopic part 120 inserted into the locking member 151 of the push switch module 150 descends in succession along the third guide slit 153 of the push switch module 150, the locking member 151 is inserted into the push switch module 150 to fix the coupling protrusion 152 of the telescopic part 120.

When the locking member 151 of the push switch module 150 is descended to a specific point and the locking member 151 remains in the descended position, the coupling protrusion 125 of the telescopic part 120 remains stationary by the locking member 151. Then, even if the user releases the pressure from the earphone 110, the earphone 110 fixed to the telescopic part 120 remains at the descended position or the position received in the earphone recess 140. Here, after descent, the push switch module 150 moves upward or ascends slightly and then remains locked.

On the contrary, when the user presses down the earphone 110 as an attempt to use the Bluetooth wireless headset 100, the push switch module 150 is unlocked and thus the locking member 151 is released to ascend.

Then, the coupling protrusion 125 of the telescopic part 120 coupled with the locking member 151 ascends together, and when the locking member 151 is ascended completely and spread open, the coupling protrusion 125 is decoupled from the locking member 151.

Then, as a fixing force is released from the telescopic part 120, the repulsive force of the coil spring 160 acting on the underside of the telescopic part 120 ascends the telescopic part 120 so that the earphone 110 moves upward and projects from the earphone recess 140.

### Embodiment 2

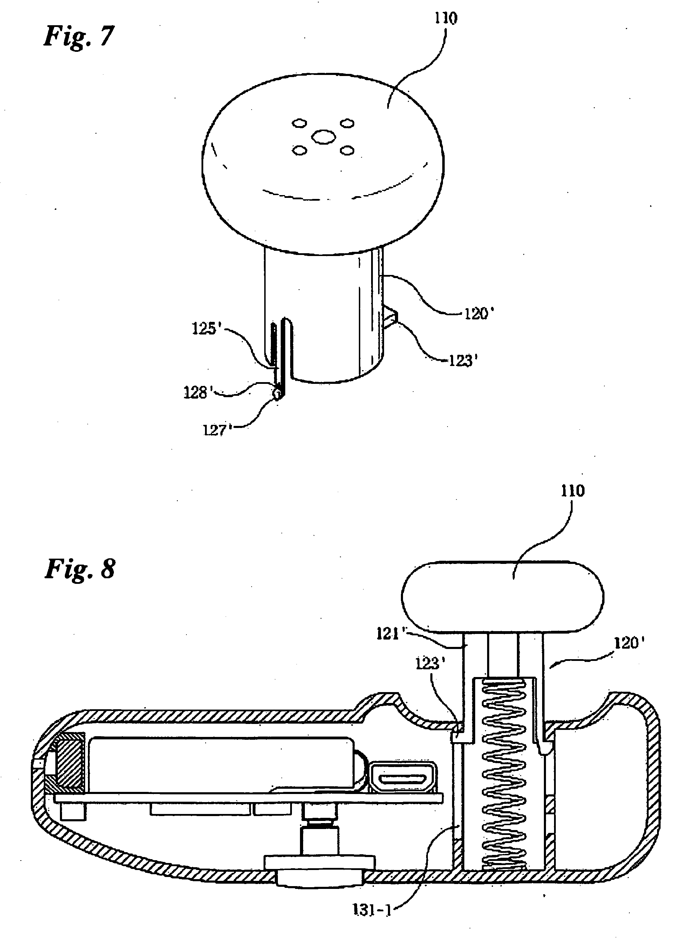

FIG. 7 is a perspective view illustrating a telescopic part 120' of a Bluetooth headset 100 (see FIG. 2) according to a second embodiment of the invention,

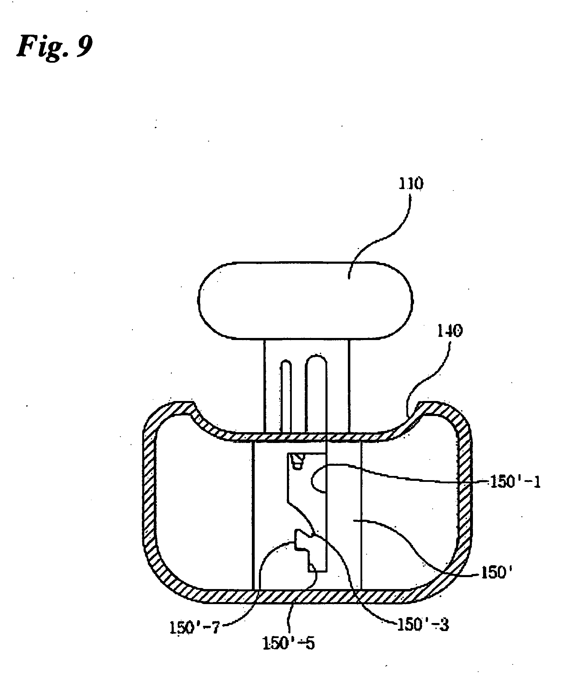

FIG. 8 is a front cross-sectional view of the Bluetooth headset 100 according to the second embodiment of the invention, and FIG. 9 is a side cross-sectional view of the Bluetooth headset 100 according to the second embodiment of the invention.

Referring to FIGS. 7 to 9, the headset 100 of this embodiment includes an earphone 110, the telescopic part 120', a body 130, an earphone recess 140, a locking part 150' and a coil spring 160.

First, the earphone 110 has a speaker unit mounted therein, which reproduces an electric signal into an audio signal through the vibration of the air. An insert member made of a soft material is provided at one end of the earphone 110 to be softly deformed when inserted into an ear of a user. Once the insert member is inserted into the ear, the inserted position can be maintained stably. Accordingly, the Bluetooth headset 100 with the earphone 110 does not need any frame or part for hanging the headset 100 on the ear, which is shaped similar to an earflap.

The telescopic part 120' includes a cylinder 121' of a hollow body, a guide protrusion 123' and a coupling pin 125'. The guide protrusion 123' is projected horizontally from the bottom end of the cylinder 121', and serves to guide protrusion/retraction while preventing separation of the telescopic part 120'. The coupling pin 125' is defined by longitudinal cuttings in a region corresponding to the guide protrusion 123' of the cylinder 121' so as to be coupled/decoupled with/from the locking part 150' explained hereunder. An inclined coupling protrusion 127' is provided at the end of the coupling pin 125', and has a slope 128' at the lower end thereof. Here, the height or length of the telescopic part 120' is preferably set to such an extent that the coupling pin 125' can be locked into and unlocked from the locking member 151.

The body 130 is bar shaped, and has a circular partition 131 defining a space 133 where the telescopic part 120' can perform reciprocal movement (i.e., upward/downward movement in the drawings).

Here, the partition 131 has a guide slit 131-1 which is arranged in a corresponding position to guide the reciprocal movement of the guide protrusion 123' of the telescopic part 120'.

On the exterior of the body 130, some components are provided such as a volume controller by which a user can control the volume, a microphone for receiving voices of the user, an on/off button for turning on/off the power of the wireless headset 100 and a charge terminal for charging the battery.

In the interior of the body 130, other components are provided further, which include a Bluetooth module for performing wireless communication with a main body such as an MP3 player and a mobile phone, an amplifier circuit for amplifying signals transmitted/received by the Bluetooth module and a circuit for reproducing amplified sound waves into certain electric signals. These components of course cooperate to operate the wireless headset, and are preferably mounted on a board 135 arranged inside the body 130.

The earphone recess 140 is depressed down into the body 130 from the top surface thereof, in the form of a hemisphere, so that the earphone 110 is not extracted out of the body 130 when retracted to the body 130.

The locking part 150' includes a rectangular slit 150'-1 formed at a side of the partition 131, a coupling protrusion 150'-3, a guide protrusion 150'-5 and a guide surface 150'-7. The coupling protrusion 150'-3 is extended inward from a longitudinal edge of the slit 150'-1 and has a downward slope so that the coupling protrusion 127' of the coupling pin 125' engages thereinto along the slope when it ascends from a descended position. The guide protrusion 150'-5 is formed at the lower end of the coupling protrusion 150'-3 and shaped quadrangular to bend the slope 128' of the coupling protrusion 127' of the coupling pin 125' when guided thereinto. The guide surface 150'-7 is formed between the coupling protrusion 150'-3 and the guide protrusion 150'-3. With the guide surface 150'-7, when the coupling protrusion 127' of the telescopic part 120' ascends from the position bent by the guide protrusion 150'-5, it does not re-couple with the coupling protrusion 150'-3 of the coupling part 150'. Here, the locking part 150' has a known structure which remains in a pressed position when pushed down once but protrudes when pushed down again. Since this structure is well-known in the art, detailed description thereof will be omitted.

The coil spring 160 is fixed to the inside of the telescopic part 120' and to the bottom of the space 133, and serves to extract or ascend the telescopic part 120' when the coupling protrusion 127' of the telescopic part 120' is decoupled from the locking part 15'.

With reference to FIG. 7, the operation of the Bluetooth wireless headset of this embodiment will be described in detail as follows.

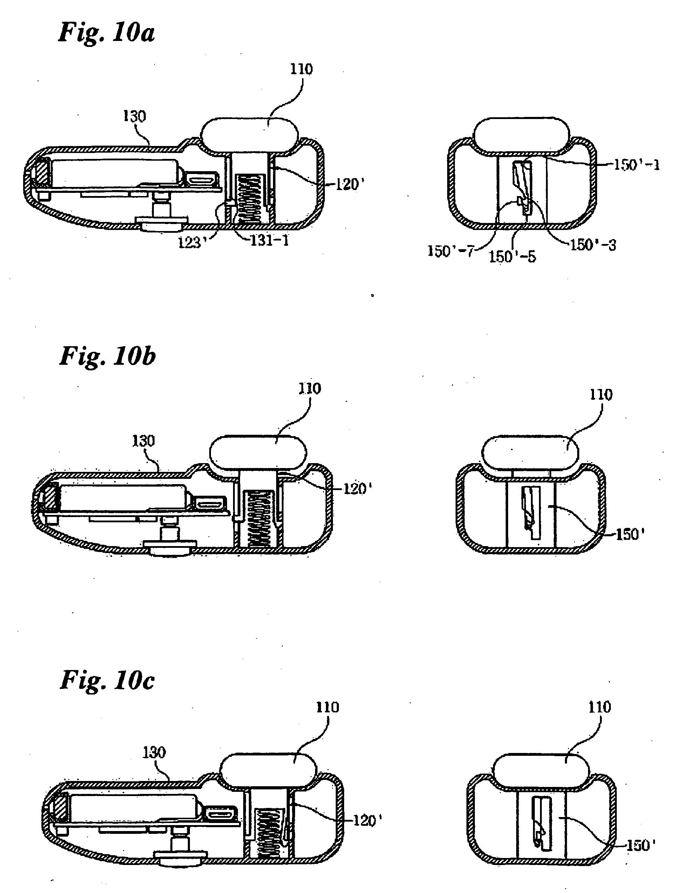

FIGS. 10a to 10c are cross-sectional views illustrating the operation of the Bluetooth headset according to the second embodiment of the invention.

When a user presses down (or inward) the earphone 110 from a position where the telescopic part 120' is extracted from the earphone recess 140, the telescopic part 120' moves downward against the repulsive force of the coil spring 160.

The telescopic part 120 moves down vertically since it is received in the space 133 by the partition 131.

In response to the downward movement of the telescopic part 120', the guide protrusion 123' of the telescopic part 120' descends along the guide slit 131-1 of the partition 131, and at the same time, the coupling protrusion 127' of the telescopic part 120' opposite to the guide protrusion 123 descends along the rectangular slit 150'-1 of the locking part 150'.

In succession, when the coupling protrusion 127' of the coupling pin 125' of the telescopic part 120' contacts the coupling protrusion 150'-3 of the locking part 150', the coupling pin 125' hinges as shown in FIG. 10b. Then, owing to the inclination of the coupling protrusion 127', it moves along the slope of the coupling protrusion 150'-3. At the lower end of the coupling protrusion 150'-3 where there is no slope, the coupling protrusion 127' converts from downward movement into horizontal movement to the left on the drawing under the restoring force of the coupling pin 125', and owing to the inclination thereof, couples with the underside of the coupling protrusion 150'-3.

When the coupling protrusion 127' of the coupling pin 125' is fixed to the coupling protrusion 150'-3 of the locking part 150', the earphone 110 fixed to the telescopic part 120' remains in a descended position, that is, a position inserted into the earphone recess 140.

On the contrary, when the user presses down the earphone 110 as an attempt to use the Bluetooth wireless headset 100, the coupling protrusion 127' of the coupling pin 125' moves downward, and thereby the slope 128' of the coupling protrusion 127' is guided and bent by the guide protrusion 150'-5.

Then, the telescopic part 120' is pushed upward from the bent position under the repulsive force of the coil spring 160. During the upward movement, the coupling protrusion 127' of the coupling pin 125' ascends vertically, but owing to its bent position maintained by the guide surface 150'-7, does not re-couple with the coupling protrusion 150'-3 of the locking part 150'.

Then, the telescopic part 120' continues to ascend so that the earphone 110 moves upward and protrudes from the earphone recess 140.

Therefore, the headset of this embodiment can prevent problems of conventional earphones which are likely to be damaged owing to contact with a body part or an external object.

The technical idea of the first and second embodiments of the invention is to place the telescopic part, on which the earphone is seated, into the space in the body via a single downward push and to project the telescopic part from the body via a second downward push. It should be construed that any telescopic parts having these features, if the functions are identical, be embraced within the scope of the invention regardless of partial changes in the construction.

Furthermore, the first and second embodiments are illustrative only but applicable to all types of headsets having a telescopic part such as an ear ring-type headset, a telemarketer's headset and a computer headset.

## Claims

1. A Bluetooth wireless headset comprising:
an earphone (110) having a speaker;
a telescopic part (120) to which the earphone is attached; and
a body (130) including a built-in Bluetooth chip, wherein the body is bar-shaped and has a space defined by a partition (131) for allowing the telescopic part to move outward and inward relative to the body; and
an earphone-receiving recess (140) depressed into the space from an upper part thereof;
**characterised by** a push switch module (150) having a locking member (151), arranged at a side of the space to fix the telescopic part (120) of the earphone.

2. The Bluetooth wireless headset according to claim 1, further comprising a coil spring (160) fixed to an interior of the telescopic part (120) and a bottom of the space to ascend the telescopic part by a repulsive force.

3. The Bluetooth wireless headset according to claim 1 or 2, wherein when the earphone is pressed to the body (130) in a position where the telescopic part (120) is projected from the earphone-receiving recess (140), the telescopic part moves into the space and couples with the push switch module (150), thereby maintaining contact with the earphone-receiving recess, and wherein, when the earphone is pressed to the body in a position where the telescopic part is placed in the space, the telescopic part decouples from the push switch module and separates from the earphone-receiving recess, thereby projecting from the body.

4. The Bluetooth wireless headset according to claim 1, wherein the telescopic part (120) includes:
a cylinder (121) of a hollow body;
a guide protrusion (123) projected horizontally from a bottom end of the cylinder to guide the outward and inward movement of the telescopic part and prevent separation thereof; and
a coupling protrusion (125) projected horizontally at a position opposed to the guide protrusion, wherein the coupling protrusion couples with a locking member (151) of the push switch module to be fixed by the push switch module in case of the inward movement, and decouples from the locking member of the push switch module in case of the outward movement.

5. The Bluetooth wireless headset according to claim 1 or 4, wherein the partition (131) has a first guide slit (131-1) arranged in a corresponding position to guide the outward and inward movement of the guide protrusion (123) of the telescopic part and a second guide slit (131-3) arranged in a corresponding position to guide the outward and inward movement of the coupling protrusion (125) of the telescopic part so that the coupling protrusion is projected out through a side of the partition.

6. The Bluetooth wireless headset according to claim 5, further comprising a third guide slit (153) formed in a side of the push switch module (150), through which the coupling protrusion (125) can move outward and inward.

## Patentansprüche

1. Drahtloser Bluetooth-Kopfhörer, aufweisend:
einen Ohrhörer (110) mit einem Lautsprecher;
einen teleskopischen Teil (120), an dem der Ohrhörer angebracht ist; und
einen Körper (130), der einen eingebauten Bluetooth-Chip enthält, wobei der Körper stabförmig ist und einen durch eine Trennwand (131) gebildeten Raum aufweist, der es dem teleskopischen Teil erlaubt, sich relativ zu dem Körper einwärts und auswärts zu bewegen; und
eine Ausnehmung (140) zur Aufnahme des Ohrhörers, welche Ausnehmung von einer Oberseite her in den Raum eingetieft ist,
**gekennzeichnet durch** ein Tastschaltmodul (150) mit einem Verriegelungselement (151), das an einer Seite des Raumes angeordnet ist, um den teleskopischen Teil (120) des Ohrhörers zu fixieren.

2. Drahtloser Bluetooth-Kopfllörer nach Anspruch 1, mit einer Schraubenfeder, die an einer Innenseite des teleskopischen Teils (120) und einem Boden des Raumes befestigt ist, um den teleskopischen Teil durch eine abstoßende Kraft auszufahren.

3. Drahtloser Bluetooth-Kopfhörer nach Anspruch 1 oder 2, bei dem, wenn in einer Position, in der der teleskopische Teil (120) aus der Ausnehmung (140) ausgefahren ist, der Ohrhörer in den Körper (130) gedrückt wird, der teleskopische Teil sich in den Raum hinein bewegt und an das Tastschaltmodul (15) koppelt, wodurch der Kontakt mit der Ausnehmung zur Aufnahme des Ohrhörers aufrechterhalten wird, und bei dem, wenn der Ohrhörer in einer Position, in welcher der teleskopische Teil in dem Raum aufgenommen ist, gegen den Körper angedrückt wird, der teleskopische Teil von dem Tastschaltmodul entkoppelt und sich aus der Ausnehmung entfernt, so dass er von dem Körper absteht.

4. Drahtloser Bluetooth-Kopfhörer nach Anspruch 1, bei dem der teleskopische Teil (120) aufweist:
einen Zylinder (121) mit einem hohlen Körper;
einen Führungsvorsprung (123), der horizontal von einem unteren Ende des Zylinders vorspringt, um die Auswärts- und Einwärtsbewegung des teleskopischen Teils zu fuhren und eine Ablösung desselben zu verhindern; und
einen Kupplungsvorsprung (125), der in einer dem Führungsvorsprung entgegengesetzten Position horizontal vorspringt, wobei der Kupplungsvorsprung mit einem Verriegelungselement (151) des Tastschaltmoduls koppelt, damit er im Fall der Einwärtsbewegung durch das Tastschaltmodul fixiert wird, und im Fall der Auswärtsbewegung von dem Verriegelungselement des Tastschaltmoduls abkoppelt.

5. Drahtloser Bluetooth-Kopfhörer nach Anspruch 1 oder 4, bei dem die Trennwand (131) einen ersten Führungsschlitz (131-1), der in einer geeigneten Position zur Führung der Auswärts- und Einwärtsbewegung des Führungsvorsprungs (123) des teleskopischen Teils angeordnet ist, und einen zweiten Führungsschlitz (131-3) aufweist, der in einer geeigneten Position zur Führung der Auswärts- und Einwärtsbewegung des Kupplungsvorsprungs (125) des teleskopischen Teils angeordnet ist, so dass der Kupplungsvorsprung zu einer Seite der Trennwand hindurchragt.

6. Drahtloser Bluetooth-Kopfhörer nach Anspruch 5, mit einem dritten Führungsschlitz (153), der in einer Seite des Tastschaltmoduls (150) ausgebildet ist und durch den sich der Kupplungsvorsprung (125) auswärts und einwärts bewegen kann.

## Revendications

1. Casque sans fil Bluetooth comprenant :
un écouteur (110) ayant un haut-parleur ;
une partie télescopique (120) à laquelle l'écouteur est fixé ; et
un corps (130) comprenant une puce Bluetooth, dans lequel le corps est en forme de barre et a un espace défini par une séparation (131) pour permettre à la partie télescopique de se déplacer vers l'extérieur et vers l'intérieur par rapport au corps ; et
un évidement de réception d'écouteur (140) enfoncé dans l'espace à partir de sa partie supérieure ;
**caractérisé par** un module de bouton poussoir (150) ayant un élément de blocage (151), agencé au niveau d'un côté de l'espace pour fixer la partie télescopique (120) de l'écouteur.

2. Casque sans fil Bluetooth selon la revendication 1, comprenant en outre un ressort hélicoïdal (160) fixé sur un intérieur de la partie télescopique (120) et un fond de l'espace pour faire monter la partie télescopique par une force de répulsion.

3. Casque sans fil Bluetooth selon la revendication 1 ou 2, dans lequel lorsque l'écouteur est appuyé sur le corps (130) dans une position dans laquelle la partie télescopique (120) fait saillie de l'évidement de réception d'écouteur (140), la partie télescopique se déplace dans l'espace et se couple avec le module de bouton poussoir (150), maintenant ainsi le contact avec l'évidement de réception d'écouteur, et dans lequel, lorsque l'écouteur est appuyé sur le corps dans une position dans laquelle la partie télescopique est placée dans l'espace, la partie télescopique se découple du module de bouton poussoir et se sépare de l'évidement de réception d'écouteur, faisant ainsi saillie du corps.

4. Casque sans fil Bluetooth selon la revendication 1, dans lequel la partie télescopique (120) comprend :
un cylindre (121) d'un corps creux ;
une saillie de guidage (123) en saillie horizontalement à partir d'une extrémité inférieure du cylindre afin de guider le mouvement vers l'extérieur et vers l'intérieur de la partie télescopique et empêcher leur séparation ; et
une saillie de couplage (125) en saillie horizontalement dans une position opposée à la saillie de guidage, dans lequel la saillie de couplage se couple avec un élément de blocage (151) du module de bouton poussoir pour être fixée par le module de bouton poussoir dans le cas du mouvement vers l'intérieur et se découple de l'élément de blocage du module de bouton poussoir dans le cas du mouvement vers l'extérieur.

5. Casque sans fil Bluetooth selon la revendication 1 ou 4, dans lequel la séparation (131) a une première fente de guidage (131 - 1) agencée dans une position correspondante afin de guider le mouvement vers l'extérieur et vers l'intérieur de la saillie de guidage (123) de la partie télescopique et une deuxième fente de guidage (131 - 3) agencée dans une position correspondante afin de guider le mouvement vers l'extérieur et vers l'intérieur de la saillie de couplage (125) de la partie télescopique de sorte que la saillie de couplage fait saillie vers l'extérieur en passant par un côté de la séparation.

6. Casque sans fil Bluetooth selon la revendication 5, comprenant en outre une troisième fente de guidage (153) formée dans un côté du module de bouton poussoir (150) à travers lequel la saillie de couplage (125) peut se déplacer vers l'extérieur et vers l'intérieur.
